# EUROPEAN PATENT APPLICATION

(11) **EP 4 647 616 A1**
(43) Date of publication of application: **12.11.2025**
(21) Application number: 24814950.2
(22) Date of filing: 27.03.2024
(51) Int. Cl.: F16B 35/00, F16B 33/02, F16B 37/08, F16L 15/06

(54) **FASTENER, MALE SCREW-SIDE MEMBER, AND FEMALE SCREW-SIDE MEMBER**

(30) Priority: 30.05.2023 JP 2023089110
(71) Applicant: Pate.To Co., Ltd, Hamamatsu-shi, Shizuoka 431-0102 (JP)
(72) Inventor: UCHIDA Yonefusa, Hamamatsu-shi, Shizuoka 431-0102 (JP)
(74) Representative: Rau, Schneck & Hübner Patentanwälte Rechtsanwälte PartGmbB
(86) International application number: PCT/JP2024/012145
(87) International publication number: WO 2024/247463

(57) **Abstract**

Provided is a fastening tool capable of shortening the time required for fastening. The present invention is provided with: a male screw-side member that comprises a screw section 11 in which the following are disposed in alternation, male screw surfaces 12A, 12B in which are formed male screw-side screw threads 12, and outer peripheral pieces 13A, 13B in which no male screw-side screw threads 12 are formed; and a female screw-side member 20 that comprises a screw hole 21 in which the following are disposed in alternation, female screw surfaces 22A, 22B in which are formed female screw-side screw threads 22, and inner peripheral pieces 23A, 23B in which no female screw-side screw threads 22 are formed, the male screw surfaces 12A, 12B and the female screw surfaces 22A, 22B being capable of screwing together. The male screw-side screw threads 12 are formed so as to increase in width, in an axial direction of the screw section 11, as the threads proceed from ahead to behind in a direction of relative rotation when the male screw surfaces 12A, 12B and the female screw surfaces 22A, 22B screw together. The female screw-side screw threads 22 are formed so as to decrease in width, in an axial direction of the screw hole 21, as the threads proceed from ahead to behind in the direction of relative rotation.

## Description

### Technical Field

The present invention relates to a fastening tool, a male screw-side member, and a female screw-side member.

### Background Art

A fastening tool is for threadedly engaging and fastening a male screw and a female screw. For the fastening tool, the following patent literature 1 discloses, for example, a technology to prevent loosening of a male screw and a female screw after fastening.

### Citation List

### Patent Literature

PTL 1: Japanese Patent Application Laid-Open No. 2011-112204

### Summary of Invention

### Technical Problem

In the conventional fastening tool as disclosed the above-mentioned patent literature 1, screw threads of a male screw and screw threads of a female screw are threadedly engaged and fastened by rotating the screws relative to each other by an amount corresponding to their respective lengths. Therefore, when the screw threads are long, fastening takes time.

Accordingly, an object of the present invention is to provide a fastening tool, a male screw-side member, and a female screw-side member that can shorten the time taken for fastening.

### Solution to Problem

In order to solve the above-described problems, a fastening tool according to a first aspect of the present invention includes: a male screw-side member having a screw portion, the screw portion being formed by alternately arranging, in an outer peripheral direction, a male screw surface where male screw-side screw threads are formed and an outer peripheral piece where the male screw-side screw threads are not formed; and a female screw-side member having a screw hole, the screw hole being formed by alternately arranging, in an inner peripheral direction, a female screw surface where female screw-side screw threads are formed and an inner peripheral piece where the female screw-side screw threads are not formed, the screw hole allowing the male screw surface and the female screw surface to be threadedly engaged with each other; and the male screw-side screw threads are formed so that their widths in an axial direction of the screw portion gradually increase from the front in a direction of relative rotation at the time of thread engagement between the male screw surfaces and the female screw surfaces toward the rear in the direction of relative rotation, and the female screw-side screw threads are formed so that their widths in the axial direction of the screw hole gradually decrease from the front in the direction of relative rotation toward the rear in the direction of relative rotation.

In a second aspect of the present invention, the fastening tool further includes a locking portion formed in the screw portion and the screw hole so as to lock the relative rotation between the screw portion and the screw hole in a thread engagement state between the male screw surface and the female screw surface.

In a third aspect of the present invention, the locking portion includes a protruding portion formed on the male screw-side screw thread, and a recessed portion formed on the female screw-side screw thread and into which the protruding portion is fitted into the thread engagement state.

In a fourth aspect of the present invention, the protruding portion is formed at the rear end of the male screw-side screw thread in the direction of relative rotation, and the recessed portion is formed at the front end of the female screw-side screw thread in the direction of relative rotation.

In a fifth aspect of the present invention, the locking portion includes a protruding portion formed on the female screw-side screw thread, and a recessed portion formed on the male screw-side screw thread and into which the protruding portion is fitted into the thread engagement state.

In a sixth aspect of the present invention, the protruding portion has a convexly curved shape at the front in the direction of relative rotation and a stepped shape at the rear in the direction of relative rotation, and the recessed portion has a concavely curved shape at the rear in the direction of relative rotation, the concavely curved shape corresponding to that of the front of the protruding portion in the direction of relative rotation, and a stepped shape at the front in the direction of relative rotation, the stepped shape corresponding to that of the rear of the protruding portion in the direction of relative rotation.

In a seventh aspect of the present invention, the screw portion is tubular and has on the inside a through hole that communicates with the screw hole in the thread engagement state of the male screw surface and the female screw surface.

In an eighth aspect of the present invention, the fastening tool further includes a male screw-side pipe arranged radially outward of a shaft center of the through hole, with one end facing the direction of relative rotation, and a female screw-side pipe arranged radially outward of a shaft center of the screw hole, with one end facing the direction of relative rotation and the one end fitted into the one end of the male screw-side pipe in the thread engagement state.

A male screw-side member according to a ninth aspect of the present invention includes a male screw surface which is arranged in part of a screw portion in an outer peripheral direction and where male screw-side screw threads are formed, and an outer peripheral piece which is arranged alternately with the male screw surface in the outer peripheral direction to form an outer periphery of the screw portion and where male screw-side screw threads are not formed, and the widths of the male screw-side screw threads in an axial direction of the screw portion gradually increase from the front in a direction of relative rotation at the time of thread engagement with a screw hole toward the rear in the direction of relative rotation.

A female screw-side member according to a tenth aspect of the present invention includes a female screw surface which is arranged in part of a screw hole in an inner peripheral direction and where female screw-side screw threads are formed, and an inner peripheral piece which is arranged alternately with the female screw surface in the inner peripheral direction to form an inner periphery of the screw hole and where female screw-side screw threads are not formed, and the widths of the female screw-side screw threads in an axial direction of the screw hole gradually narrow from the front in a direction of relative rotation at the time of thread engagement with a screw portion to the rear in the direction of relative rotation.

### Advantageous Effects of Invention

The fastening tool, the male screw-side member, and the female screw-side member according to the present invention can shorten the time required for fastening.

### Brief Description of Drawings

[Fig. 1] FIG. 1 is a perspective view of a fastening tool according to a first embodiment of the present invention.
[Fig. 2] FIG. 2 is a cross-sectional view taken along a line II-II of FIG. 1.
[Fig. 3] FIG. 3 is a cross-sectional view taken along a line III-III of FIG. 1.
[Fig. 4] FIG. 4 is a side view of a screw portion shown in FIG. 1.
[Fig. 5] FIG. 5 is an axial cross-sectional view of a screw hole shown in FIG. 1.
[Fig. 6] FIG. 6 is an enlarged view schematically showing a state where a male screw surface shown in FIG. 2 is threadedly engaged with a female screw surface shown in FIG. 3.
[Fig. 7] FIG. 7 is an enlarged perspective view of protruding portions shown in FIG. 2 and recessed portions shown in FIG. 3.
[Fig. 8] FIG. 8 is a cross-sectional view corresponding to FIG. 2 of a male screw-side member according to a second embodiment of the present invention.
[Fig. 9] FIG. 9 is a cross-sectional view corresponding to FIG. 3 of a female screw-side member according to a second embodiment of the present invention.
[Fig. 10] FIG. 10 is an axial cross-sectional view schematically illustrating a state where male screw surfaces and female screw surfaces according to a second embodiment of the present invention are threadedly engaged with each other.
[Fig. 11] FIG. 11 is a partially enlarged view of a male screw-side pipe and a female screw-side pipe shown in FIG. 10. Description of Embodiments

Hereinafter, the embodiments of the present invention will be described with reference to the accompanying drawings. In order to facilitate understanding of the description, the same components are denoted by the same reference numerals in each drawing as much as possible, and redundant descriptions will be appropriately omitted.

### ==First Embodiment==

Hereinafter, a first embodiment of the present invention will be described.

### <<Configuration>>

First, the configuration of a fastening tool 1 according to the first embodiment (hereinafter referred to as "the present embodiment") of the present invention will be described.

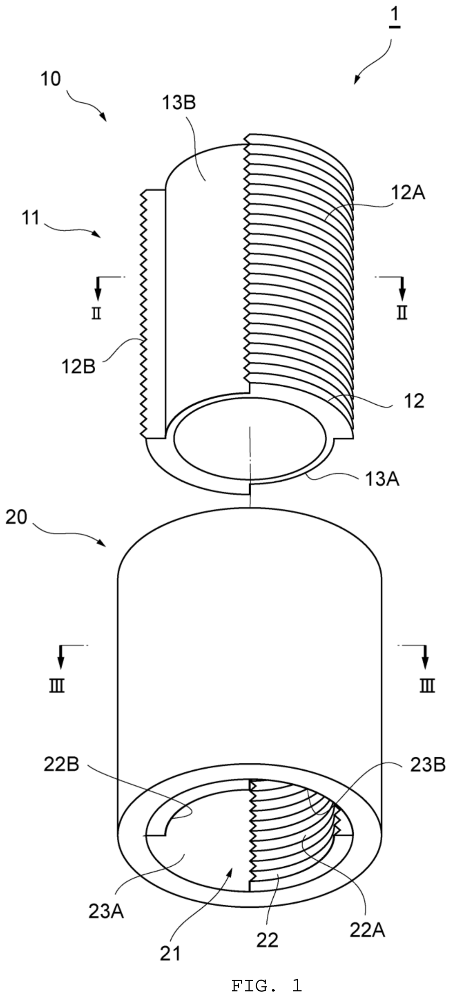

FIG. 1 is a perspective view of the fastening tool 1 according to the present embodiment.

As shown in FIG. 1, the fastening tool 1 includes a male screw-side member 10 and a female screw-side member 20, as main parts.

The male screw-side member 10 includes a tubular screw portion 11 having a through hole 14 on the inside, as main parts.

The screw portion 11 extends in the axial direction such that male screw surfaces 12A, 12B where male screw-side screw threads 12 are formed and outer peripheral pieces 13A, 13B where the screw threads 12 are not formed are alternately arranged in an outer peripheral direction.

Roughly speaking, the outer peripheral piece 13A and the outer peripheral piece 13B have shapes formed by cutting off part of an outer peripheral surface of a cylindrical shape in the peripheral direction.

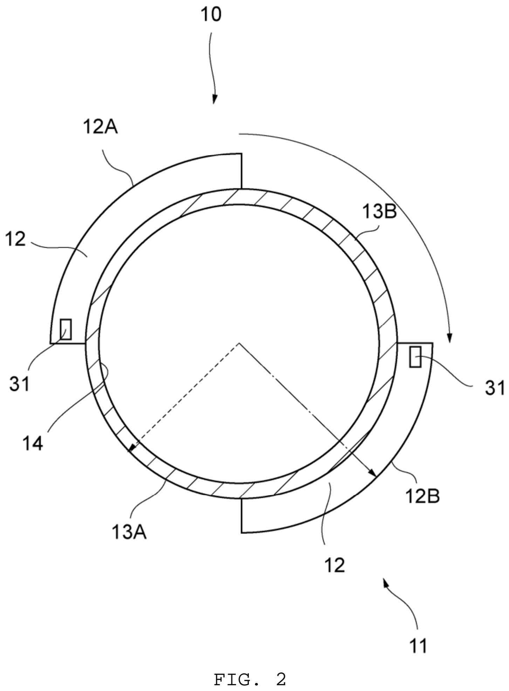

FIG. 2 is a cross-sectional view taken along a line II-II of FIG 1.

FIG. 2 shows that the screw portion 11 is formed such that the male screw surface 12A, the outer peripheral piece 13A, the male screw surface 12B and the outer peripheral piece 13B are arranged in this order in the peripheral direction. The solid arrow in FIG. 2 indicates the direction of relative rotation when the male screw surface 12A is threadedly engaged with the female screw surface 22B, which will be described later, and when the male screw surface 12B is threadedly engaged with the female screw surface 22A, which will be described later, respectively.

As shown in Fig. 2, the outer diameter of the screw thread 12 (a dashed-dotted line arrow) is larger than the outer diameter of the outer peripheral piece 13A and the outer peripheral piece 13B (a dashed line arrow).

On the other hand, the female screw-side member 20 shown in FIG. 1 includes a screw hole 21, as main parts.

The screw hole 21 extends in the axial direction such that female screw surfaces 22A, 22B where female screw-side screw threads 22 are formed and inner peripheral pieces 23A, 23B where the screw threads 22 are not formed are alternately arranged in an inner peripheral direction.

Roughly speaking, the inner peripheral piece 23A and the inner peripheral piece 23B have shapes formed by cutting off part of the inner peripheral surface of a cylindrical shape in the peripheral direction.

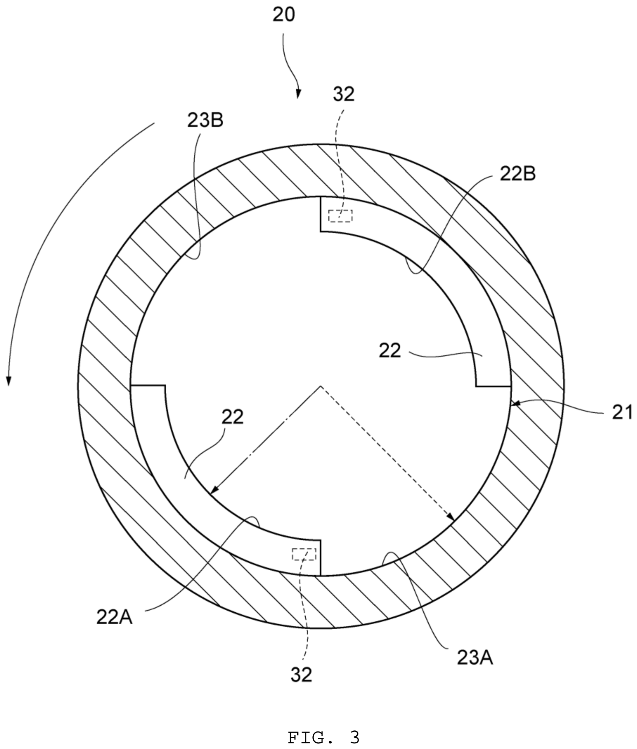

FIG. 3 is a cross-sectional view taken along a line III-III of FIG 1.
FIG. 3 shows that the screw hole 21 is formed such that the female screw surface 22A, the inner peripheral piece 23A, the female screw surface 22B and the inner peripheral piece 23B are arranged in this order in the peripheral direction. The solid arrow in FIG. 3 indicates the direction of relative rotation when the male screw surface 12A is threadedly engaged with the female screw surface 22B, which will be described later, and when the male screw surface 12B is threadedly engaged with the female screw surface 22A, which will be described later.

As shown in FIG. 3, in the screw hole 21, the screw thread 22 (a dashed-dotted line arrow) is smaller in hole diameter than the inner peripheral piece 23A and the inner peripheral piece 23B (a dashed line arrow).

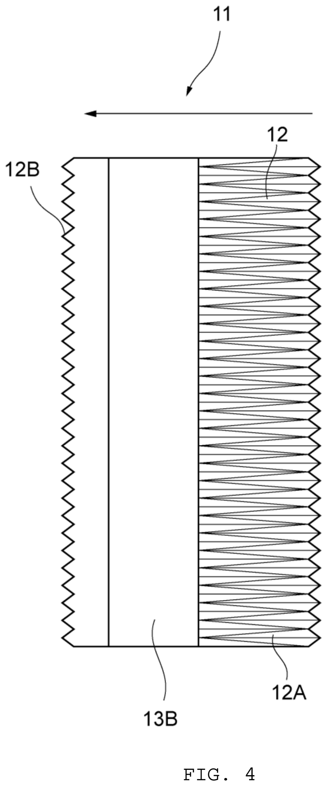

FIG. 4 is a side view of the screw portion 11 shown in FIG. 1 (note that the protruding portion 31, which will be described later, is omitted in FIG. 4).

The solid arrow in FIG. 4 indicates the direction of relative rotation when the male screw surface 12A is threadedly engaged with the female screw surface 22B, which will be described later, and when the male screw surface 12B is threadedly engaged with the female screw surface 22A, which will be described later, respectively.

As shown in FIG. 4, the screw threads 12 are formed such that the widths of the screw threads in the axial direction of the screw portion 11 gradually increase from the front in the direction of relative rotation toward the rear in the direction of relative rotation.

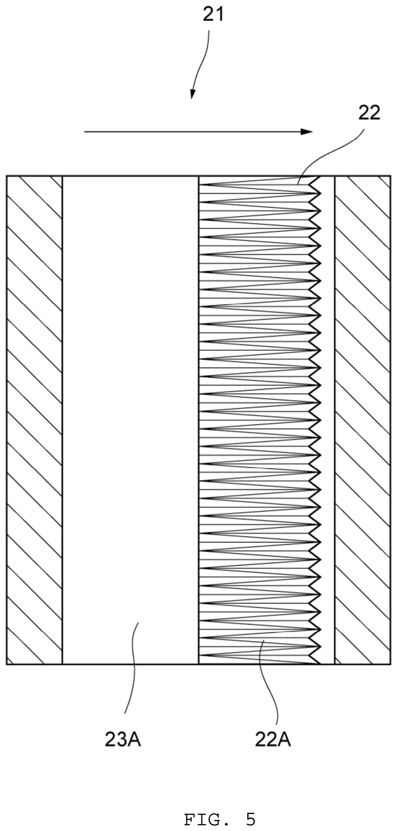

FIG. 5 is an axial cross-sectional view of the screw hole 21 shown in FIG. 1 (note that a recessed portion 32, which will be described later, is omitted in FIG. 5).

The solid arrow in FIG. 5 indicates the direction of relative rotation when the male screw surface 12A is threadedly engaged with the female screw surface 22B, which will be described later, and when the male screw surface 12B is threadedly engaged with the female screw surface 22A, which will be described later, respectively.

As shown in FIG. 5, the screw threads 22 are formed such that the widths of the screw threads in the axial direction of the screw hole 21 gradually decrease from the front in the direction of relative rotation toward the rear in the direction of relative rotation. In this way, the spaces between adjacent screw threads 22 are naturally formed so that the widths of the spaces in the axial direction of the screw hole 21 gradually increase from the front in the direction of relative rotation to the rear in the direction of relative rotation.

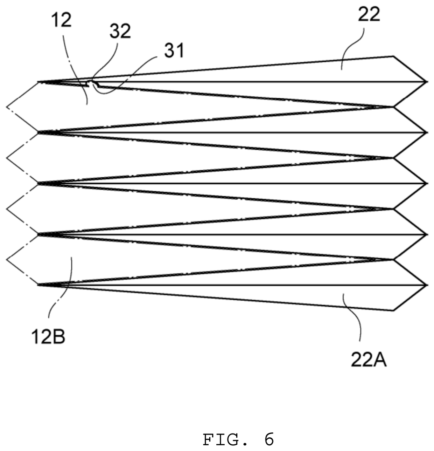

Here, FIG. 6 is an enlarged view schematically showing the state where a male screw surface 12B shown in FIG. 2 is threadedly engaged with a female screw surface 22A shown in FIG. 3. Now in FIG. 6, the screw threads 12 of the male screw surface 12B are represented by a dashed-dotted line.

As shown in the schematic enlarged view of FIG. 6, the female screw surface 22B can be threadedly engaged with the male screw surface 12A, and the female screw surface 22A can be threadedly engaged with the male screw surface 12B. By screwing these together, the screw portion 11 and the screw hole 21 can be fastened together.

In addition, the through hole 14 of the tubular screw portion 11 shown in FIG. 2 communicates with the screw hole 21 shown in FIG. 3 in the above-mentioned thread engagement state. This allows the male screw-side member 10 and the female screw-side member 20 to be used as a flow passage such as a water pipe.

Here, the fastening tool 1 according to the present embodiment further includes protruding portions 31 shown in FIGS. 2 and 6, and recessed portions 32 shown in FIGS 3 and 6. The protruding portions 31 and the recessed portions 32 are one example of locking portions formed on the screw portion 11 and the screw hole 21 to lock the relative rotation between the screw portion 11 and the screw hole 21 in the thread engagement state of the male screw surfaces 12A, 12B and the female screw surfaces 22A, 22B.

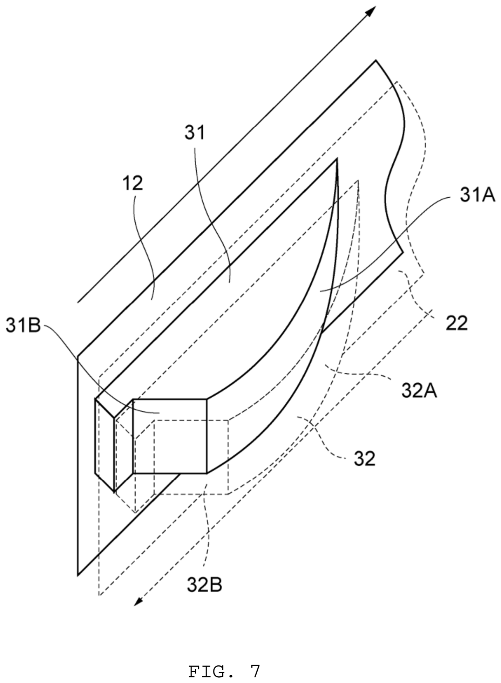

FIG. 7 is an enlarged perspective view of the protruding portion 31 shown in FIG. 2 and the recessed portion 32 shown in FIG. 3.

In FIG. 7, the recessed portion 32 is shown by a virtual line (dashed line) as viewed from the inside. FIG. 7 also shows a fitting state of the protruding portion 31 and the recessed portion 32, but for ease of understanding, the protruding portion 31 and the recessed portion 32 in the fitting state are shown in a slightly spaced apart manner.

The solid arrow in Fig. 7 represents the direction of relative rotation of the screw portion 11 and the protruding portion 31 when the male screw surfaces 12A, 12B and the female screw surfaces 22A, 22B are threadedly engaged with each other and the screw portion 11 is fastened to the screw hole 21, and the dashed line arrow in Fig. 7 represents the direction of relative rotation of the screw hole 21 and the recessed portion 32.

As shown in FIG. 7, the protruding portion 31 is formed on the surface of the screw thread 12. However, the protruding portion 31 may be provided at one or more locations among a plurality of screw threads 12 formed on the male screw surface 12A and the male screw surface 12B (note that Fig. 2 shows, as an example, a state where the protruding portion 31 is provided on two screw threads 12).

The protruding portion 31 has a convexly curved shape at the front 31A in the direction of relative rotation, and a stepped shape at the rear 31B in the direction of relative rotation.

The recessed portion 32 is formed in the face of the screw thread 22. However, the recessed portions 32 of the number corresponding to the protruding portions 31 may be provided at locations corresponding to the protruding portions 31 in the thread engagement state of the male screw surfaces 12A, 12B and the female screw surfaces 22A, 22B (note that Fig. 3 shows, as an example, a state where the recessed portion 32 is provided on two screw threads 22).

The recessed portion 32 is fitted into the protruding portion 31 in the thread engagement state of the male screw surfaces 12A, 12B and the female screw surfaces 22A, 22B, and has a concavely curved shape at the rear 32A in the direction of relative rotation, the concavely curved shape corresponding to that of the front 31A of the protruding portion 31 in the direction of relative rotation, and a stepped shape at the front 32B in the direction of relative rotation, the stepped shape corresponding to that of the rear 31B of the protruding portion 31 in the direction of relative rotation.

Furthermore, in the present embodiment, in the screw portion 11, the outer peripheral piece 13A and the outer peripheral piece 13B are preferably longer than the male screw surface 12A and the male screw surface 12B, respectively. In addition, in the screw hole 21, the inner peripheral piece 23A and the inner peripheral piece 23B are preferably longer than the female screw surface 22A and the female screw surface 22B, respectively.

It is particularly preferable that the outer peripheral piece 13A and the outer peripheral piece 13B have a length that is more than 1/2 and equal to or less than 2/3 of the entire perimeter in the peripheral direction of the screw portion 11. It is also preferable that the inner peripheral piece 23A and the inner peripheral piece 23B have a length that is more than 1/2 and equal to or less than 2/3 of the entire perimeter in the peripheral direction of the screw hole 21. By setting these lengths to more than 1/2, it becomes easier to insert the screw portion 11 into the screw hole 21. By setting these lengths to equal to or less than 2/3, it becomes possible to enhance the fastening power between the screw portion 11 and the screw hole 21.

More preferably, in the screw portion 11, the outer peripheral pieces 13A and 13B are made approximately 1% longer than the male screw surfaces 12A and 12B, respectively. In the screw hole 21, the inner peripheral pieces 23A and 23B are made approximately 1% longer than the female screw surfaces 22A and 22B, respectively.

### <<Operation>>

A description will now be given of the operation of the fastening tool 1 according to the present embodiment.

First, as shown in FIG. 1, the screw portion 11 is linearly inserted into the screw hole 21 at an angular position where the male screw surface 12A and the inner peripheral piece 23B, the male screw surface 12B and the inner peripheral piece 23A, the outer peripheral piece 13A and the female screw surface 22A, and the outer peripheral piece 13B and the female screw surface 22B are opposed to each other, respectively.

After the screw portion 11 is inserted into the screw hole 21, the screw portion 11 and the screw hole 21 are fastened together by rotating the screw portion 11 and the screw hole 21 relative to each other by 90° so that the male screw surface 12A and the female screw surface 22B, and the male screw surface 12B and the female screw surface 22A are threadedly engaged with each other, respectively.

With regard to the above-mentioned thread engagement, first, the narrowest side of the screw thread 12 on the male screw surface 12A is inserted from the narrowest side of the screw thread 22 on the female screw surface 22B, i.e., from the side on which the widths between the screw threads 22 are the widest.

When they are further rotated relative to each other therefrom, eventually, the narrowest side of the screw thread 12 on the male screw surface 12A and the widest side of the screw thread 22 on the female screw surface 22B (the side on which the widths between the screw threads 22 are the narrowest), and the widest side of the screw thread 12 on the male screw surface 12A and the narrowest side of the screw thread 22 (the side on which the widths between the screw threads 22 are the widest), will be in sliding contact with each other and threadedly engaged together.

The above description of the thread engagement between the male screw surface 12A and the female screw surface 22B also applies to the thread engagement between the male screw surface 12B and the female screw surface 22A.

When the male screw surfaces 12A and 12B are threadedly engaged with the female screw surfaces 22A and 22B as described above, the protruding portions 31 and the recessed portions 32 engage with each other, thereby reliably locking the relative rotation between the screw portion 11 and the screw hole 21.

When the screw portion 11 and the screw hole 21 are rotated relative to each other so that the male screw surface 12A and the female screw surface 22B, and the male screw surface 12B and the female screw surface 22A are threadedly engaged with each other, respectively, the protruding portion 31 fits into the recessed portion 32 from the front 31A of its convexly curved shape in the direction of relative rotation.

### <<Advantageous Effects>>

The fastening tool 1 according to the present embodiment includes: the male screw-side member 10 having the screw portion 11, the screw portion 11 being formed by alternately arranging, in an outer peripheral direction, the male screw surfaces 12A, 12B where the male screw-side screw threads 12 are formed and the outer peripheral pieces 13A, 13B where the male screw-side screw threads 12 are not formed; and the female screw-side member 20 having the screw hole 21, the screw hole 21 being formed by alternately arranging, in an inner peripheral direction, the female screw surfaces 22A, 22B where the female screw-side screw threads 22 are formed and the inner peripheral pieces 23A, 23B where the female screw-side screw threads 22 are not formed, the screw hole 21 allowing the male screw surfaces 12A, 12B and the female screw surfaces 23A, 23B to be threadedly engaged with each other; and the male screw-side screw threads 12 are formed so that their widths in an axial direction of the screw portion 11 gradually increase from the front in a direction of relative rotation at the time of thread engagement between the male screw surfaces 12A, 12B and the female screw surfaces 22A, 22B toward the rear in the direction of relative rotation, and the female screw-side screw threads 22 are formed so that their widths in the axial direction of the screw hole 21 gradually decrease from the front in the direction of relative rotation toward the rear in the direction of relative rotation.

In contrast to the conventional screw portion in which the screw threads are continuous, the screw portion 11 includes the outer peripheral piece 13A and the outer peripheral piece 13B. Therefore, the screw threads 12 are short (provided that the length in the axial direction is the same as that of the conventional screw portion). Similarly, in contrast to the conventional screw hole where the screw threads are continuous, the screw hole 21 includes the inner peripheral piece 23A and the inner peripheral piece 23B. Therefore, the screw threads 22 are short (provided that the length in the axial direction is the same as that of the conventional screw hole). Therefore, the fastening tool 1 according to the present embodiment can shorten the time taken for fastening compared to the conventional ones.

Furthermore, since the narrowest sides of the screw threads 12 are inserted into the screw threads 22 at the time of the thread engagement between the male screw surfaces 12A, 12B and the female screw surfaces 22A, 22B, the friction at the start of insertion is smaller and the thread engagement is easier.

Further, in the fastening tool 1 according to the present embodiment, the outer peripheral pieces 13A, 13B are longer than the male screw surfaces 12A, 12B in the peripheral direction, and the inner peripheral pieces 23A, 23B are longer than the female screw surfaces 22A, 22B in the peripheral direction.

As already explained, when the screw portion 11 is inserted into the screw hole 21, it is first inserted at an angular position where the male screw surface 12A and the inner peripheral piece 23B, the male screw surface 12B and the inner peripheral piece 23A, the outer peripheral piece 13A and the female screw surface 22A, and the outer peripheral piece 13B and the female screw surface 22B are opposed to each other, respectively. Thus, by making the outer peripheral pieces 13A, 13B longer than the male screw surfaces 12A, 12B in the peripheral direction, and making the inner peripheral pieces 23A, 23B longer than the female screw surfaces 22A, 22B in the peripheral direction, even if the angular position at the time of the insertion is slightly deviated, the screw threads 12 of the male screw surfaces 12A, 12B and the screw threads 22 of the female screw surfaces 22A, 22B do not come into contact with each other, and the insertion can be performed smoothly.

The fastening tool 1 according to the present embodiment further includes the locking portion formed in the screw portion 11 and the screw hole 21 so as to lock a relative rotation between the screw portion 11 and the screw hole 21 in the thread engagement state between the male screw surfaces 12A, 12B and the female screw surfaces 22A, 22B.

This structure can prevent the thread engagement state between the male screw surfaces 12A, 12B and the female screw surfaces 22A, 22B from loosening.

Moreover, in the present embodiment, the locking portion includes the protruding portion 31 that is formed on the male screw-side screw thread 12, and the recessed portion 32 that is formed on the female screw-side screw thread 22 with the protruding portion 31 being fitted into the recessed portion 32 in the thread engagement state.

Such a simple structure can thus prevent the thread engagement state between the male screw surfaces 12A, 12B and the female screw surfaces 22A, 22B from loosening.

Moreover, in the present embodiment, the protruding portion 31 is formed at the rear end of the male screw-side screw thread 12 in the direction of relative rotation, and the recessed portion 32 is formed at the front end of the female screw-side screw thread 22 in the direction of relative rotation.

As a result, when the screw portion 11 and the screw hole 21 are rotated relative to each other so that the male screw surfaces 12A and 12B are threadedly engaged with the female screw surfaces 22A and 22B, the length over which the protruding portion 31 of the male screw-side screw thread 12 contacts the surface of the female screw-side screw thread 22 is shortened, which allows smooth fitting.

Further, in the present embodiment, the locking portion may include the protruding portion 31 formed on the female screw-side screw thread 22, and the recessed portion 32 formed on the male screw-side screw thread 12 and into which the protruding portion 31 is fitted into the thread engagement state. This makes it possible to prevent the thread engagement state between the male screw surfaces 12A, 12B and the female screw surfaces 22A, 22B from loosening with a simple structure.

Further, in the present embodiment, the protruding portion 31 has the convexly curved shape at the front 31A in the direction of relative rotation and the stepped shape at the rear 31B in the direction of relative rotation, and the recessed portion 32 has the concavely curved shape at the rear 32A in the direction of relative rotation, the concavely curved shape corresponding to that of the front 31A of the protruding portion 31 in the direction of relative rotation, and the stepped shape at the front 32B in the direction of relative rotation, the stepped shape corresponding to that of the rear 31B of the protruding portion 31 in the direction of relative rotation.

As a result, when the screw portion 11 and the screw hole 21 are rotated relative to each other so that the male screw surfaces 12A and 12B are threadedly engaged with the female screw surfaces 22A and 22B, the protruding portion 31 fits into the recessed portion 32 from the convexly curved front 31A in the direction of relative rotation, which allows smooth fitting. When removing the protruding portion 31, it is removed from the stepped rear 31B of the protruding portion 31 in the direction of relative rotation. Thus, it can be removed more easily than, for example, the case that the rear 31B of the protruding portion 31 in the direction of relative rotation is a vertical surface.

In the present embodiment, the screw portion 11 is tubular and has on the inside the through hole 14 that communicates with the screw hole 21 in the thread engagement state of the male screw surfaces 12A, 12B and the female screw surfaces 22A, 22B.

This allows the male screw-side member and the female screw-side member to be used as the flow passage such as a water pipe, which improves the convenience.

Moreover, the male screw-side member 10 according to the present embodiment includes the male screw surfaces 12A, 12B that are arranged in part of the screw portion 11 in the outer peripheral direction and where the male screw-side screw threads 12 are formed, and the outer peripheral pieces 13A, 13B which are arranged alternately with the male screw surfaces 12A, 12B in the outer peripheral direction to form the outer periphery of the screw portion 11 and where the male screw-side screw threads 12 are not formed, and the widths of the male screw-side screw threads 12 in the axial direction of the screw portion 11 gradually increase from the front in the direction of relative rotation at the time of thread engagement with the screw hole 21 (i.e., at the time of thread engagement between the male screw surfaces 12A, 12B and the female screw surfaces 22A, 22B) toward the rear in the direction of relative rotation.

In contrast to the conventional screw portion of the male screw where the screw threads are continuous, the screw portion 11 includes the outer peripheral piece 13A and the outer peripheral piece 13B. As a result, the screw threads 12 are short (provided that the axial length is the same as that of the conventional screw portion) and therefore the time taken for fastening can be made shorter than in the past.

Furthermore, since the narrowest side of the screw thread 12 is first inserted between the female screw-side screw threads 22 at the time of threadedly engaging the male screw surfaces 12A, 12B with the female screw surfaces 22A, 22B, the friction at the start of insertion is smaller and the thread engagement is easier.

Moreover, the female screw-side member 20 according to the present embodiment includes the female screw surfaces 22A, 22B which are arranged in part of the screw hole 21 in the inner peripheral direction and where the female screw-side screw threads 22 are formed, and the inner peripheral pieces 23A, 23B which are arranged alternately with the female screw surfaces 22A, 22B in the inner peripheral direction to form the inner periphery of the screw hole 21 and where the female screw-side screw threads 22 are not formed, and the widths of the female screw-side screw threads 22 in the axial direction of the screw hole 21 gradually narrow from the front in the direction of relative rotation at the time of thread engagement with the screw portion 11 (i.e., at the time of thread engagement between the male screw surfaces 12A, 12B and the female screw surfaces 22A, 22B) toward the rear in the direction of relative rotation.

In contrast to the conventional screw hole of the male screw where the screw threads are continuous, the screw hole 21 includes the inner peripheral piece 23A and the inner peripheral piece 23B. As a result, the screw threads 22 are short (provided that the axial length is the same as that of the conventional screw hole) and therefore the time taken for fastening can be made shorter than in the past.

Furthermore, since the narrowest side of the screw threads 22 is first inserted between the male screw-side screw threads 12 at the time of threadedly engaging the female screw surfaces 22A, 22B with the male screw surfaces 12A, 12B, the friction at the start of insertion is smaller and the thread engagement is easier.

### ==Second Embodiment==

Hereinafter, a second embodiment of the present invention will be described.

### <<Configuration>>

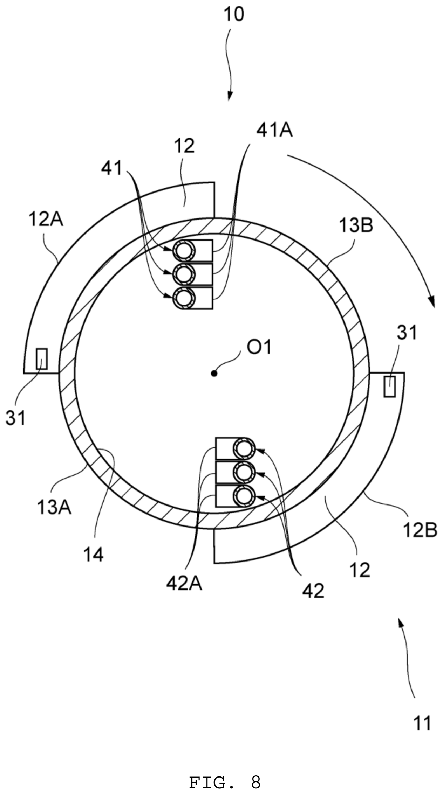

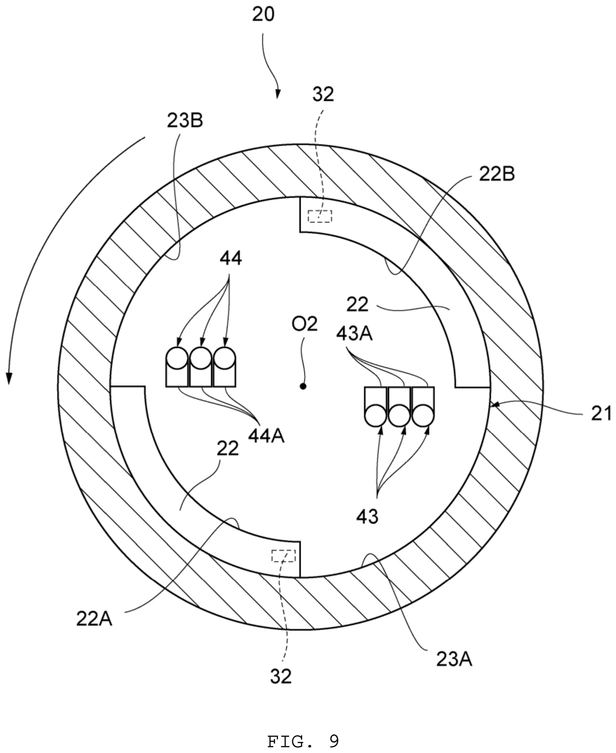

FIG. 8 is a cross-sectional view corresponding to FIG. 2 of a male screw-side member according to the second embodiment (hereinafter referred to as "the present embodiment") of the present invention. FIG. 9 is a cross-sectional view corresponding to FIG. 3 of the female screw-side member according to the present embodiment.

In the present embodiment, in addition to the configuration of the fastening tool 1 according to the first embodiment of the present invention, it further includes first male screw-side pipes 41 and second male screw-side pipes 42 shown in FIG. 8, and first female screw-side pipes 43 and second female screw-side pipes 44 shown in FIG. 9.

As shown in FIG. 8, the first male screw-side pipe 41 has an outer diameter less than the radius of the through hole 14 and is disposed radially outward of the shaft center O1 of the through hole 14. FIG. 8 shows that three first male screw-side pipes 41 are arranged in the radial direction of the screw portion 11 (i.e., the radial direction of the through hole 14), but there may be any number of first male screw-side pipes 41 as long as they are one or more.

The first male screw-side pipe 41 extends in the axial direction of the screw portion 11 (i.e., the axial direction of the through hole 14), and further, as shown in FIG. 8, an end 41A on the tip side of the screw portion 11 is arranged so as to be directed to the direction of relative rotation of the screw portion 11 (the direction of the arrow in Fig. 8) when the male screw surfaces 12A, 12B and the female screw surfaces 22A, 22B are threadedly engaged with each other.

The second male screw-side pipe 42 has an outer diameter less than the radius of the through hole 14 and is located radially outward of the shaft center O1 of the through hole 14. Fig. 8 shows that three second male screw-side pipes 42 are arranged in the radial direction of the screw portion 11 (i.e., the radial direction of the through hole 14), but there may be any number of second male screw side pipes 42 as long as they are one or more.

The second male screw-side pipe 42 extends in the axial direction of the screw portion 11 (i.e., the axial direction of the through hole 14), and further, as shown in FIG. 8, an end 42A on the tip side of the screw portion 11 is arranged so as to be directed to the direction of relative rotation of the screw portion 11 (the direction of the arrow in FIG. 8) when the male screw surfaces 12A, 12B and the female screw surfaces 22A, 22B are threadedly engaged with each other.

Furthermore, the second male screw-side pipe 42 is positioned so as to be spaced apart from the respective first male screw-side pipe 41 by an angle (180°) that is twice the angle of relative rotation (90°) when the male screw surfaces 12A, 12B and the female screw surfaces 22A, 22B are threadedly engaged with each other.

As shown in FIG. 9, the first female screw-side pipe 43 has an outer diameter less than the radius of the screw hole 21 and is disposed radially outward from the shaft center O2 of the screw hole 21. FIG. 9 shows that three first female screw-side pipes 43 are arranged in the radial direction of the screw hole 21, and the number of the first female screw-side pipes 43 should be the same as the number of the first male screw-side pipes 41.

The first female screw-side pipe 43 extends in the axial direction of the screw hole 21, and further, as shown in FIG. 9, the end 43A on the inlet side of the screw hole 21 is arranged so as to be directed to the direction of relative rotation of the screw hole 21 (the direction of the arrow in FIG. 9) when the male screw surfaces 12A, 12B and the female screw surfaces 22A, 22B are threadedly engaged with each other.

The second female screw-side pipe 44 has an outer diameter less than the radius of the screw hole 21 and is located radially outward of the shaft center O2 of the screw hole 21. Fig. 9 shows that three second female screw-side pipes 44 are arranged in the radial direction of the screw hole 21 and the number of the second female screw-side pipes 44 should be the same as the number of the second male screw-side pipes 42.

The second female screw-side pipe 44 extends in the axial direction of the screw hole 21, and further, as shown in Fig. 9, the end 44A on the inlet side of the screw hole 21 is arranged so as to be directed to the direction of relative rotation of the screw hole 21 (the direction of the arrow in Fig. 9) when the male screw surfaces 12A, 12B and the female screw surfaces 22A, 22B are threadedly engaged with each other.

Furthermore, the second female screw-side pipe 44 is positioned so as to be spaced apart from the respective first female screw-side pipe 43 by an angle (180°) that is twice the angle of relative rotation (90°) when the male screw surfaces 12A, 12B and the female screw surfaces 22A, 22B are threadedly engaged with each other.

Furthermore, the first female screw-side pipe 43 is positioned forward in the direction of relative rotation of the screw portion 11 (i.e., rearward in the direction of relative rotation of the screw hole 21) by the angle of relative rotation of 90° of the screw portion 11 at the time of the thread engagement, in relation to the first male screw-side pipe 41. The second female screw-side pipe 44 is positioned forward in the direction of relative rotation of the screw portion 11 (i.e., rearward in the direction of relative rotation of the screw hole 21) by the angle of relative rotation of 90° of the screw portion 11 at the time of the thread engagement, in relation to the second male screw-side pipe 42.

That is, at the time of inserting the screw portion 11 into the screw hole 21, the first male screw-side pipe 41, the first female screw-side pipe 43, the second male screw-side pipe 42 and the second female screw-side pipe 44 are positioned so as to be offset by an angle of 90° in a radial cross-sectional view, respectively, as shown in Fig. 8 and Fig. 9.

In this way, when the screw portion 11 is first linearly inserted into the screw hole 21, the male screw side pipes 41, 42 and the female screw side pipes 43, 44 do not come into contact with each other. After the screw portion 11 is inserted into the screw hole 21, the screw portion 11 and the screw hole 21 are rotated relative to each other so that the male screw surfaces 12A, 12B and the female screw surfaces 22A, 22B are threadedly engaged with each other.

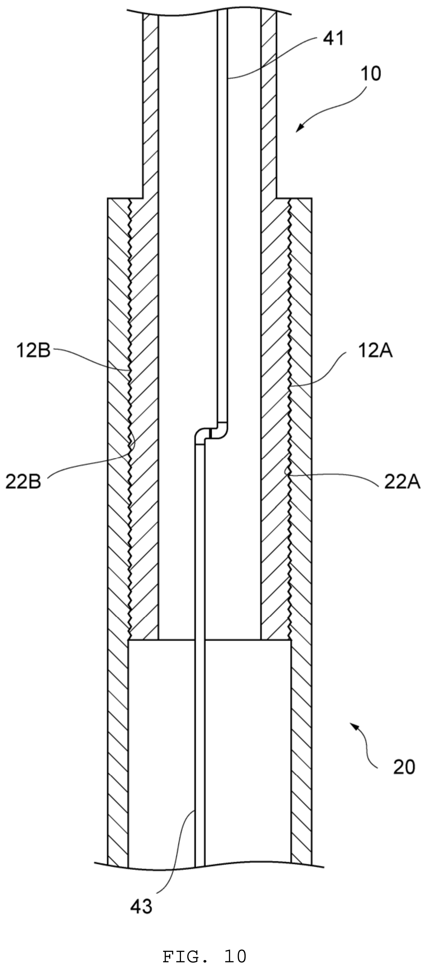

Here, FIG. 10 is an axial cross-sectional view schematically illustrating a state where the male screw surfaces 12A, 12B and the female screw surfaces 22A, 22B are threadedly engaged with each other. The second male screw-side pipe 42 and the second female screw-side pipe 44 are omitted in FIG. 10.

As shown in FIG. 10, in the thread engagement state of the male screw surfaces 12A, 12B and the female screw surfaces 22A, 22B, the end 43A of the first female screw-side pipe 43 fits into the end 41A of the first male screw-side pipe 41, as well as the end 44A of the second female screw-side pipe 44 fits into the end 42A of the second male screw-side pipe 42.

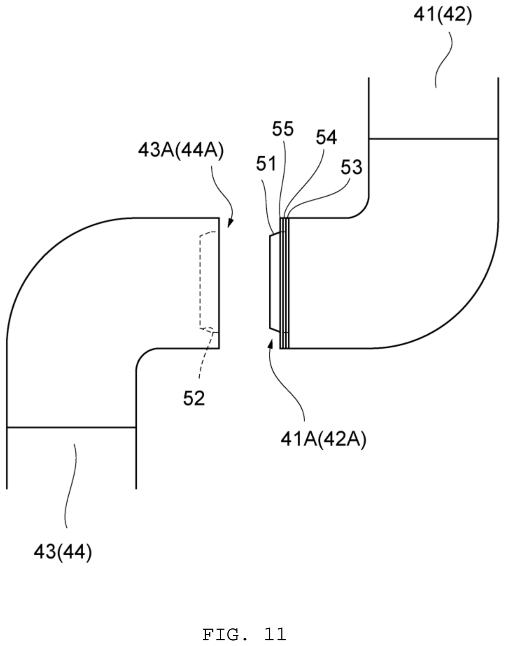

FIG. 11 is an enlarged view of the end 41A of the first male screw-side pipe 41 and the end 43A of the first female screw-side pipe 43.

An annular protruding portion 51 is formed on the end 41A.
An annular recessed portion 52 corresponding to the shape of the protruding portion 51 is formed on the end 43A.

Furthermore, a spring washer 53, a washer 54 and an O-ring 55 are provided in a stacked manner in this order at the base of the protruding portion 51 of the end 41A.

By providing these, when the end 41A having the protruding portion 51 and the end 43A having the recessed portion 52 are fitted with each other, it is possible to ensure the airtightness at the fitting portion of the first male screw-side pipe 41 and the first female screw-side pipe 43 without any gaps.

However, the configuration of the end 41A of the first male screw-side pipe 41 and the configuration of the end 43A of the first female screw-side pipe 43 may be reversed.

The above-mentioned explanation concerning Fig. 11 also applies to the end 42A of the second male screw-side pipe 42 and the end 44A of the second female screw-side pipe 44.

Now in the present embodiment, the axial positions and/or peripheral positions of the ends 41A of the multiple first male screw-side pipes 41 may be different from each other. Similarly, the axial positions and/or peripheral positions of the ends 42A of the multiple second male screw-side pipes 42 may be different from each other.

### <<Advantageous Effects>>

The fastening tool 1 of this embodiment further comprises the male screw-side pipes 41, 42 arranged radially outward of the shaft center O1 of the through hole 14, with one end 41A, 42A facing the direction of relative rotation of the screw portion 11 at the time of thread engagement between the male screw surfaces 12A, 12B and the female screw surfaces 22A, 22B, and the female screw-side pipes 43, 44 arranged radially outward of the shaft center O2 of the screw hole 21, with one ends 43A, 44A facing the direction of relative rotation of the screw hole 21 at the time of thread engagement between the male screw surfaces 12A, 12B and the female screw surfaces 22A, 22B and with the one ends 43A, 44A fitted into the one ends 41A, 42A of the male screw-side pipes 41, 42 in the thread engagement state of the male screw surfaces 12A, 12B and the female screw surfaces 22A, 22B.

As a result, the male screw-side pipes 41, 42 and the female screw-side pipes 43, 44 are respectively communicated in the thread engagement state of the male screw surfaces 12A, 12B and the female screw surfaces 22A, 22B, and these can be used as pipe for use applications independent of the male screw-side member 10 and the female screw-side member 20, which further improves the convenience.

The above-mentioned use applications of the communicated first male screw-side pipe 41 and first female screw-side pipe 43 include, for example, a fluid flow passage and a solid passage (when there are two or more first male screw-side pipes 41 and two or more first female screw-side pipes 43), a hydraulic forward path and a hydraulic return path (when there are two or more first male screw-side pipes 41 and two or more first female screw-side pipes 43), an arrangement of electrical wiring (such as a single-layer three-wire system when there are three or more first male screw-side pipes 41 and three or more first female screw-side pipes 43), and a gas flow path (such as a flow path for O₂, N₂ and CO₂ when there are three or more first male screw-side pipes 41 and three or more first female screw-side pipes 43).

The above-mentioned use applications of the communicated second male screw-side pipe 42 and second female screw-side pipe 44 are also similar. Therefore, the first male screw-side pipe 41, the first female screw-side pipe 43 and the second male screw-side pipe 42, the second female screw-side pipe 44 can be used for different use applications.

### == Modification ==

The present invention is not limited to the above-described embodiments. That is, the above-described specific examples in which design changes have been appropriately made by a person skilled in the art are encompassed by the scope of the present invention as long as the features of the present invention are included. In addition, the respective elements included in the above-described embodiments and following modifications can be combined as long as the combinations are technically possible, and those obtained by the combinations thereof are also encompassed by the scope of the present invention as long as they include the features of the present invention.

For example, in each embodiment, the screw portion 11 includes two male screw surfaces and two outer peripheral pieces, and the screw hole 21 includes two female screw surfaces and two inner peripheral pieces. However, the present invention does not limit the number of these surfaces. That is, the configuration is acceptable as long as the screw portion 11 includes one or more male screw surfaces and one or more outer peripheral pieces, and as long as the screw hole 21 includes one or more female screw surfaces and one or more inner peripheral pieces. However, it is preferable that the numbers of the male screw surfaces, the outer peripheral pieces, the female screw surfaces, and the inner peripheral pieces be the same.

The angle of relative rotation between the screw portion 11 and the screw hole 21 necessary for threadedly engaging the male screw surfaces with the female screw surfaces varies depending on the number of the male screw surfaces and the female screw surfaces.

For example, in a case where the lengths of the male screw surface, the outer peripheral piece, the female screw surface, and the inner peripheral piece in the peripheral direction are the same, the angle of relative rotation is 180° when each of the unit counts of the male screw surface, the outer peripheral piece, the female screw surface, and the inner peripheral piece is one.

When each of the unit counts of the male screw surface, the outer peripheral piece, the female screw surface, and the inner peripheral piece is two, the angle of the relative rotation is 90° (the above embodiment takes this shape as an example).

When each of the unit counts of the male screw surface, the outer peripheral piece, the female screw surface, and the inner peripheral piece is three, the angle of the relative rotation is 60°.

When each of the unit counts of the male screw surface, the outer peripheral piece, the female screw surface, and the inner peripheral piece is four, the angle of the relative rotation is 45°.

That is, as the number of each of the surfaces increases, the angle of the relative rotation between the screw portion 11 and the screw hole 21 decreases, so that the time required for fastening can be shortened.

Furthermore, regardless of each of the numbers of the surfaces, it is preferable that the outer peripheral piece be made longer than the male screw surface in the outer peripheral direction and also that the inner peripheral piece be made longer than the female screw surface in the inner peripheral direction. When they are formed in this manner, the angle of the relative rotation changes, naturally.

Alternatively, the outer peripheral piece may be made shorter than the male screw surface in the peripheral direction, and the inner peripheral piece may be made shorter than the female screw surface in the inner direction. This structure improves the fastening power between the screw portion 11 and the screw hole 21.

Furthermore, in the above-mentioned second embodiment, since the angle of relative rotation between the male screw surfaces 12A, 12B and the female screw surfaces 22A, 22B at the time of the thread engagement is 90°, the first male screw-side pipe 41, the first female screw-side pipe 43, the second male screw-side pipe 42 and the second female screw-side pipe 44 are arranged at positions shifted by 90° from each other. But when the angle of relative rotation is different described above, the pipes are arranged so that they are spaced apart at an angle equal to the angle of relative rotation.

FIGS. 1, 4 and 5 show a state where the screw threads 12 and 22 are not inclined relative to the radial direction of the screw portion 11 and the screw hole 21. This is because, in case of conventional screws, the screw portion is inserted into the screw hole by rotating it, but in case of the fastening tool 1, the screw portion 11 is linearly inserted into screw hole 21 with the male screw surfaces 12A and 12B facing the inner peripheral pieces 23A and 23B, and then rotated to be threadedly engaged, and then there is no need to advance it in the axial direction during the rotation. However, the screw threads 12 and 22 may also be inclined, as in conventional screws.

In addition, the respective shapes of the screw threads 12 and the screw threads 22 are not limited to those shown in Figs. 1 to 11 and can be changed to various shapes.

The protruding portion 31 may be formed on the female screw surface 22A and the female screw surface 22B, and the recessed portion 32 may be formed on the male screw surface 12A and the male screw surface 12B. In this case as well, the protruding portion 31 has a convexly curved shape at the front 31A in the direction of relative rotation and a stepped shape at the rear 31B in the direction of relative rotation. The recessed portion 32 is fitted into the protruding portion 31 in the thread engagement state of the male screw surfaces 12A, 12B and the female screw surfaces 22A, 22B, and the recessed portion 32 has a concavely curved shape corresponding to the front 31A of the protruding portion 31 in the direction of relative rotation, at the rear 32A in the direction of relative rotation, and a stepped shape corresponding to the rear 31B of the protruding portion 31 in the direction of relative rotation, at the front 32B in the direction of relative rotation.

The male screw-side member 10 may have a head like a normal male screw. Furthermore, the screw portion 11 may not have the through hole 14 on the inside and may be dense like a normal screw portion. The female screw-side member 20 may have the bottom surface on the opposite side of the inlet side (i.e., the insertion side of the male screw-side member 10).

In addition, the fastening tool 1 can be used for those having a diameter of several cm to several tens of meters. As for the material, various materials such as metal, vinyl chloride, glass, and the like can be applied.

## Claims

1. A fastening tool comprising:
a male screw-side member having a screw portion, the screw portion being formed by alternately arranging, in an outer peripheral direction, a male screw surface where male screw-side screw threads are formed and an outer peripheral piece where the male screw-side screw threads are not formed; and
a female screw-side member having a screw hole, the screw hole being formed by alternately arranging, in an inner peripheral direction, a female screw surface where female screw-side screw threads are formed and an inner peripheral piece where the female screw-side screw threads are not formed, the screw hole allowing the male screw surface and the female screw surface to be threadedly engaged with each other;
wherein the male screw-side screw threads are formed so that their widths in an axial direction of the screw portion gradually increase from the front in a direction of relative rotation at the time of thread engagement between the male screw surface and the female screw surface toward the rear in the direction of relative rotation, and the female screw-side screw threads are formed so that their widths in the axial direction of the screw hole gradually decrease from the front in the direction of relative rotation toward the rear in the direction of relative rotation.

2. The fastening tool according to claim 1, further comprising a locking portion formed in the screw portion and the screw hole so as to lock the relative rotation between the screw portion and the screw hole in a thread engagement state between the male screw surface and the female screw surface.

3. The fastening tool according to claim 2, wherein the locking portion includes a protruding portion formed on the male screw-side screw thread, and a recessed portion formed on the female screw-side screw thread and into which the protruding portion is fitted into the thread engagement state.

4. The fastening tool according to claim 3, wherein the protruding portion is formed at the rear end of the male screw-side screw thread in the direction of relative rotation, and the recessed portion is formed at the front end of the female screw-side screw thread in the direction of relative rotation.

5. The fastening tool according to claim 2, wherein the locking portion includes a protruding portion formed on the female screw-side screw thread, and a recessed portion formed on the male screw-side screw thread and into which the protruding portion is fitted in the thread engagement state.

6. The fastening tool according to any one of claims 3 to 5, wherein the protruding portion has a convexly curved shape at the front in the direction of relative rotation and a stepped shape at the rear in the direction of relative rotation, and
wherein the recessed portion has a concavely curved shape at the rear in the direction of relative rotation, the concavely curved shape corresponding to that of the front of the protruding portion in the direction of relative rotation, and a stepped shape at the front in the direction of relative rotation, the stepped shape corresponding to that of the rear of the protruding portion in the direction of relative rotation.

7. The fastening tool according to claim 1, wherein the screw portion is tubular and has on the inside a through hole that communicates with the screw hole in the thread engagement state of the male screw surface and the female screw surface.

8. The fastening tool according to claim 7, further comprising,
a male screw-side pipe arranged radially outward of a shaft center of the through hole, with one end facing the direction of relative rotation, and
a female screw-side pipe arranged radially outward of a shaft center of the screw hole, with one end facing the direction of relative rotation and the one end fitted into the one end of the male screw-side pipe in the thread engagement state.

9. A female screw-side member comprising,
a female screw surface which is arranged in part of a screw hole in an inner peripheral direction and where female screw-side screw threads are formed, and
an inner peripheral piece which is arranged alternately with the female screw surface in the inner peripheral direction to form an inner periphery of the screw hole and where female screw-side screw threads are not formed,
wherein the widths of the female screw-side screw threads in an axial direction of the screw hole gradually narrow from the front in a direction of relative rotation at the time of thread engagement with a screw portion toward the rear in the direction of relative rotation.
